# EUROPÄISCHE PATENTSCHRIFT

(11) **EP 3 535 538 B1**
(45) Veröffentlichungstag und Bekanntmachung des Hinweises auf die Patenterteilung: **07.06.2023**
(21) Anmeldenummer: 17803776.8
(22) Anmeldetag: 07.11.2017
(51) Int. Cl.: F28D 20/00, F28F 27/00, F16M 1/00, A47F 7/28, B65D 90/00, B65D 90/12

(54) **VORRICHTUNG ZUM SPEICHERN VON THERMISCHER ENERGIE**
SYSTEM FOR STORING THERMAL ENERGY
DISPOSITIF DE STOCKAGE D'ÉNERGIE THERMIQUE

(30) Priorität: 07.11.2016 DE 202016006835 U
(43) Veröffentlichungstag der Anmeldung: 11.09.2019
(73) Patentinhaber: Kuffer, Roland, 85098 Großmehring (DE); Schilling, Gerhard, 86529 Schrobenhaussen (DE)
(72) Erfinder: Kuffer, Roland, 85098 Großmehring (DE); Schilling, Gerhard, 86529 Schrobenhaussen (DE)
(74) Vertreter: Witzany, Manfred
(86) Internationale Anmeldenummer: PCT/EP2017/001290
(87) Internationale Veröffentlichungsnummer: WO 2018/082815

(56) Entgegenhaltungen:
- DE-A1- 3 145 197
- DE-A1-102011 000 655
- DE-A1-102011 053 349
- JP-A- 2003 240 464
- US-A- 4 373 574
- US-A1- 2011 146 940

## Beschreibung

Die Erfindung betrifft eine Vorrichtung zum Speichern von thermischer Energie mittels mindestens einer Flüssigkeit, die in mindestens einem Behälter vorgesehen ist.

Aus der WO 2015/022693 A1 ist eine gattungsgemäße Vorrichtung bekannt. Diese besteht im Wesentlichen aus einem Behälter, der mit Flüssigkeit gefüllt ist. In diesen Behälter führen Flüssigkeitsleitungen einerseits zu einem Vorlauf und andererseits zu einem Rücklauf eines Heizungssystems. Der Behälter selbst ist mit einer Flüssigkeit, nämlich Wasser gefüllt. Dabei bildet sich innerhalb des Behälters eine thermische Schichtung, so dass kaltes Wasser aufgrund seiner größeren Dichte sich unten im Behälter ansammelt, während warmes Wasser darüber liegt. Diese Vorrichtung hat sich in der Praxis vielfach bewährt und bildet den Ausgangspunkt der vorliegenden Erfindung. Dokument US4373574A offenbart eine Vorrichtung zum Speichern von thermischer Energie gemäß dem Oberbegriff des Anspruchs 1.

Der Erfindung liegt die Aufgabe zugrunde, eine Vorrichtung der eingangs genannten Art zu schaffen, die sich durch eine verbesserte Speicherdauer der thermischen Energie auszeichnet.

Diese Aufgabe wird erfindungsgemäß mit der Vorrichtung zum Speichern von thermischer Energie gemäß Anspruchs 1 gelöst.

Die erfindungsgemäße Vorrichtung dient zum Speichern von thermischer Energie mittels mindestens einer Flüssigkeit. Für die Flüssigkeit kommen unterschiedlichste Stoffe in Betracht, die vorzugsweise eine hohe latente Wärme bzw. eine hohe spezifische Wärmekapazität aufweisen. Im einfachsten Fall wird Wasser als Flüssigkeit genutzt, was sich durch eine außerordentlich hohe spezifische Wärmekapazität auszeichnet. Die im Wasser enthaltene Wärme ist dabei in etwa proportional zur Temperatur, so dass die Wärme ohne Phasenübergang gespeichert werden kann. Nach dem Stand der Technik wird die Flüssigkeit im mindestens einen Behälter thermisch geschichtet. Dabei liegt die kalte Flüssigkeit aufgrund ihrer höheren Dichte im Behälter unten, während die warme Flüssigkeit mit ihrer geringeren Dichte oben schwimmt. Die Grenzfläche zwischen der kalten und der warmen Flüssigkeit erfährt dabei eine gewisse Durchmischung, wodurch Wärme aus der warmen Flüssigkeit in die kalte überströmt. Damit kann nur ein Teil der gespeicherten thermischen Energie wieder entnommen werden. Zur Verbesserung der thermischen Energieausbeute werden mehrere der Behälter eingesetzt. Diese sind neben der mindestens einen Flüssigkeit zusätzlich mit mindestens einem Gas füllbar. Damit kann die mindestens eine Flüssigkeit aus dem mindestens einen Behälter entnommen werden, ohne gleichzeitig das fehlende Volumen durch kalte Flüssigkeit ersetzen zu müssen. Der Volumenausgleich erfolgt in diesem Fall durch das mindestens eine Gas, welches sich gegenüber der mindestens einen Flüssigkeit durch eine um etwa den Faktor 1000 geringere Dichte und damit auch entsprechend geringere absolute Wärmekapazität auszeichnet. Damit erfährt die mindestens eine Flüssigkeit beim Entnehmen aus dem mindestens einen Behälter nur eine geringfügige Abkühlung durch Kontakt mit dem mindestens einen Gas. Eine Durchmischung ist jedoch aufgrund der extremen Dichteunterschiede von vornherein ausgeschlossen. Um die Vorrichtung auf diese Weise betreiben zu können, sind allerdings mehrere der Behälter erforderlich, so dass mindestens einer von diesen als Flüssigkeitsquelle und mindestens ein anderer der Behälter als Flüssigkeitssenke nutzbar ist. Zu diesem Zweck sind die Behälter über mit Ventilen absperrbaren Flüssigkeitsleitungen wahlweise mit mindestens einem Vorlauf und mindestens einem Rücklauf verbindbar. Auf diese Weise sind die Behälter wahlweise als Wärmequelle und Wärmesenke nutzbar. Die mit erwärmter Flüssigkeit gefüllten Behälter können daher praktisch vollständig entleert und die darin gespeicherte Wärme genutzt werden. Jeder auf diese Weise entleerte Behälter kann anschließend zur Aufnahme der abgekühlten Flüssigkeit aus dem Rücklauf genutzt werden. Auf diese Weise ergibt sich ein überraschend hocheffizienter thermischer Energiespeicher. Je nach Anforderung kann die Effizienz auch dadurch erhöht werden, dass die einzelnen Behälter mit Flüssigkeiten unterschiedlicher Temperaturen gefüllt werden, je nachdem welche Temperaturen aus einer Heizungsanlage wie beispielsweise einer Solarthermie-Anlage, Geothermie-Anlage oder dgl. gerade zur Verfügung stehen. Umgekehrt kann bei einem Wärmebedarf jener Behälter mit dem Vorlauf verbunden werden, der gerade noch die erforderliche Temperatur aufweist. Auf diese Weise ergibt sich ein besonders effizientes System.

Gemäß einem nicht in den Ansprüchen enthaltenen Beispiel, ist es vorteilhaft, zur Erzielung eines möglichst kostengünstigen Aufbaus, wenn der mindestens eine Behälter mindestens eine formveränderliche aber zugfeste Behälterwand aus mindestens einer Kunststofffolie aufweist. Auf diese Weise ergibt sich ein materialsparender Behälter, der insbesondere auch leicht zu transportieren und zu montieren ist. Dies ist bei der Aufstellung einer Vielzahl von Behältern ein entscheidendes Kriterium. Das Problem an formveränderlichen Behältern ist grundsätzlich, dass diese durch Biegungen beim Befüllen bzw. Entleeren beansprucht werden, wodurch deren Lebensdauer stark eingeschränkt ist. Aufgrund der Volumenkompensation mit dem mindestens einen Gas spielt dieser Effekt bei der Vorrichtung jedoch keine Rolle. Zur Erzielung einer ausreichenden Zugfestigkeit der mindestens einen Kunststofffolie ist es zweckmäßig, diese durch mindestens ein Netz bzw. Gitter zu verstärken. Auf diese Weise kann eine relativ hohe und damit ausreichende Zugfestigkeit erzielt werden, ohne eine übermäßige Biegesteifigkeit der Kunststofffolie zu erzielen. Die Biegsamkeit der mindestens einen Kunststofffolie ist zur Erzielung des erforderlichen Volumenausgleichs von erheblicher Bedeutung. Insbesondere ist daran gedacht, die mindestens eine Kunststofffolie so zu platzieren, dass sie die mindestens eine Flüssigkeit vom mindestens einen Gas trennt.

Zur Erzielung eines möglichst einfachen Ventilaufbaus, der trotzdem universell einsetzbar ist, ist es günstig, wenn die Ventile mindestens einen Vorlauf- und/oder Rücklauf-Multiplexer bilden. Dabei wird einerseits der Vorlauf über die Ventile wahlweise mit einem der Behälter verbunden. Unabhängig davon wird auch der Rücklauf wahlweise über die Ventile mit mindestens einem der Behälter verbunden. Damit kann in beliebiger Weise ausgewählt werden, welcher Behälter mit dem Vorlauf und welcher mit dem Rücklauf zu verbinden ist. Um die Behälter möglichst platzsparend und gleichzeitig sicher zu halten, ist es vorteilhaft, wenn diese an mindestens einem Gestell hängend gehalten sind. Damit wirken auf die Behälterwände im Wesentlichen nur Zugkräfte. Da die Zugfestigkeit jedes Materials wesentlich besser als die Schubfestigkeit ist, kann der Behälter auf diese Weise sehr materialsparend ausgebildet sein, ohne dessen Funktionsfähigkeit zu beeinträchtigen.

Grundsätzlich kann der Gasaustausch zwischen den Behältern offen erfolgen, indem diese mit der Atmosphäre in Kontakt stehen. Dadurch ergibt sich jedoch das potentielle Problem, dass insbesondere Mikroorganismen in den Behältern wachsen könnten. Um dies zu vermeiden, ist es vorteilhaft, wenn die Behälter gasseitig durch mindestens eine Gasleitung in kommunizierender Verbindung stehen. Zwischen diesen Gasleitungen ist eine Entkopplung mittels Ventilen in der Regel nicht erforderlich. Diese kann allerdings vorgesehen sein, um beispielsweise ein Entleeren des Behälters mittels Druckbeaufschlagung durch das mindestens eine Gas zu ermöglichen.

Zur weiteren Verbesserung der Vorrichtung ist es vorteilhaft, wenn in jeden der Behälter eine der Flüssigkeitsleitungen führt. Bei üblichen Vorrichtungen aus dem Stand der Technik sind stets zwei Flüssigkeitsleitungen in den Behälter zu führen. Dabei wird die Flüssigkeit durch die eine Flüssigkeitsleitung dem Behälter zugeführt und durch die andere abgeführt. Bei der erfindungsgemäßen Vorrichtung reicht jedoch grundsätzlich eine Flüssigkeitsleitung aus, über die die mindestens eine Flüssigkeit wahlweise zugeführt bzw. abgeführt wird. Ein gleichzeitiges Zu- und Abführen der mindestens einen Flüssigkeit ist bei der erfindungsgemäßen Ausgestaltung nicht erforderlich, so dass auch eine entsprechende zweite Flüssigkeitsleitung entfallen kann. Dies vereinfacht den Aufbau erheblich.

Zur Bildung eines geschlossenen Systems für die mindestens eine Flüssigkeit ist es vorteilhaft, wenn die mindestens eine Flüssigkeit vom mindestens einen Gas durch mindestens eine Behälterwand getrennt ist. Um dennoch die gewünschte Volumenänderung des Behälters für die mindestens eine Flüssigkeit zu ermöglichen, ist diese mindestens eine Behälterwand formveränderlich ausgebildet.

In der Regel ist es zweckmäßig, den Füllstand und die Temperatur jedes einzelnen Behälters zu überprüfen, um auf diese Weise ein Leerlaufen des Vorlaufs bzw. ein Überlaufen des Behälters zuverlässig zu verhindern und die korrekte Behälterauswahl zu erleichtern. Das Vorsehen entsprechender Sensoren in jedem Behälter ist jedoch technisch und insbesondere kostenmäßig sehr aufwendig. Außerdem erhöht diese große Anzahl von Sensoren auch die mögliche Fehlerrate beim Ausfall einzelner Sensoren. Einfacher ist es dagegen, in der Flüssigkeitsleitung mindestens einen Sensor vorzusehen. Dieser mindestens eine Sensor kann mindestens ein Drucksensor sein, der den Gegendruck des Behälters anzeigt, mit dem die mindestens eine Flüssigkeitsleitung verbunden ist. Dieser Gegendruck ist proportional zur Füllhöhe, so dass der Drucksensor auf diese Weise als Flüssigkeitsstandsensor genutzt werden kann. Ist der mindestens eine Sensor als mindestens ein Temperatursensor ausgebildet, so kann auf diese Weise die Temperatur der mindestens einen Flüssigkeit ermittelt werden. Die Temperaturmessung erfolgt dabei lediglich beim Befüllen bzw. Entleeren des jeweiligen Behälters. Mögliche Temperaturänderungen durch Wärmeleitung und -strahlung können dann durch ein entsprechendes Modell berechnet werden, so dass auf diese Weise trotzdem die Temperaturverläufe der mindestens einen Flüssigkeit in den jeweiligen Behältern bekannt sind.

Zur Vereinfachung des Aufbaus der Vorrichtung ist es vorteilhaft, wenn das mindestens eine Gestell modular aufgebaut ist. Dabei können Stützfüße des mindestens einen Gestells derart ausgebildet sein, dass sie ein Gewicht von benachbarten Behältern abstützen. Auf diese Weise werden Stützfüße zwischen den Behältern doppelt genutzt, was den Aufbau erheblich vereinfacht.

Zur Verbindung der einzelnen Elemente des Gestells haben sich Steckverbindungen bewährt. In einfachen Fällen müssen diese Steckverbindungen noch nicht einmal gesichert werden, wenn sie durch das Gewicht der Behälter und der darin enthaltenen mindestens einen Flüssigkeit in Steckrichtung vorbelastet sind. In anderen Fällen ist eine entsprechende Sicherung zweckmäßig.

Um zu verhindern, dass sich Drücke von einem Behälter auf den nächsten, insbesondere darunterliegenden ausbreiten, ist es zweckmäßig, wenn die Behälter zumindest teilweise hydrostatisch entkoppelt sind. Dies wird erreicht, indem eine unmittelbare kommunizierende Verbindung zwischen diesen Behältern beispielsweise durch entsprechende Ventilschaltungen verhindert ist. Außerdem ist es zweckmäßig, die Behälter so zu beabstanden, dass sie nicht über die Behälterwände Druckkräfte übertragen können.

Um sicherzustellen, dass die gespeicherte mindestens eine Flüssigkeit aus dem Rücklauf stets in einen der Behälter fließen kann, ist es vorteilhaft, wenn die Summe der Speichervolumina der Behälter derart bemessen ist, dass diese wenigstens um das maximale Füllvolumen eines der Behälter größer ist als die Menge der zu speichernden mindestens einen Flüssigkeit. Damit steht immer genügend Freiraum zur Verfügung, um die mindestens eine Flüssigkeit aufzunehmen.

Für das mindestens eine Gas ist es vorteilhaft, wenn es biologisch inert ist. Dadurch wird verhindert, dass über das Gas Lebewesen versorgt werden, die sich in den Behältern vermehren könnten. Beispiele für inertes Gas sind Stickstoff oder Kohlendioxid. Diese Aufzählung ist jedoch nicht abschließend zu verstehen, sondern lediglich beispielhaft.

Um zu verhindern, dass Behälter überlaufen bzw. der Vorlauf leerläuft, ist es zweckmäßig, wenn in der Vorrichtung mindestens ein Controller vorgesehen ist, der den Füllzustand der Behälter überwacht. Dieser mindestens eine Controller steuert dann Ventile entsprechend an, um die beschriebenen Betriebszustände zu vermeiden. Sobald ein Behälter leer wird, schaltet der mindestens eine Controller einfach auf den nächsten geeigneten Behälter weiter. Umgekehrt schaltet der mindestens eine Controller beim Vollwerden eines Behälters auf den nächsten leeren um, um die mindestens eine Flüssigkeit dort aufzunehmen.

Der Erfindungsgegenstand wird beispielhaft anhand der Zeichnung erläutert, ohne den Schutzumfang zu beschränken.

Es zeigt:
- Figur 1: eine schematische Darstellung einer Vorrichtung zum Speichern von thermischer Energie,
- Figur 2: eine geschnittene Teildarstellung der Vorrichtung gemäß Figur 1 und
- Figur 3: eine räumliche Darstellung eines Steckverbinders.

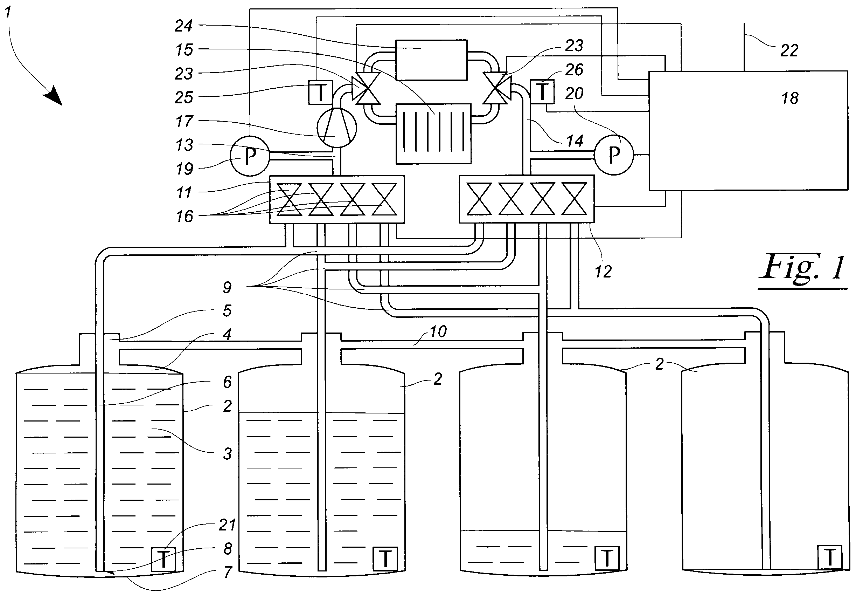

Eine Vorrichtung 1 gemäß Figur 1 weist mehrere Behälter 2 auf, die teilweise mit einer Flüssigkeit 3, insbesondere Wasser gefüllt sind. Die abgebildete Anzahl der Behälter 2 ist nur beispielhaft zu verstehen. Ein verbleibendes Volumen der Behälter 2 ist dabei mit einem Gas 4, insbesondere Stickstoff oder Kohlendioxid gefüllt. Dieses Gas 4 dient als Puffervolumen, um aus dem Behälter 2 entnommene Flüssigkeit 3 volumenmäßig zu ersetzen. Da das Gas 4 eine um etwa den Faktor 1000 geringere Dichte als die Flüssigkeit 3 aufweist, ist dessen absolute Wärmekapazität gegenüber der Flüssigkeit 3 vernachlässigbar gering.

Die Behälter 2 weisen oberseitig Anschlüsse 5 auf, über die der Materialtransport in bzw. aus den Behältern 2 erfolgt. Diese Anschlüsse 5 weisen ein Tauchrohr 6 auf, welches vom Anschluss 5 bis nahe eines Bodens 7 des Behälters 2 verläuft. Damit wird erreicht, dass ein unteres Ende 8 des Tauchrohres 6 immer in die Flüssigkeit 3 eintaucht, wodurch im Tauchrohr 6 im Wesentlichen ausschließlich die Flüssigkeit 3 transportiert wird. Das Tauchrohr 6 ist mit einer Flüssigkeitsleitung 9 verbunden, über die die Flüssigkeit 3 dem Behälter 2 zugeführt bzw. von diesem abgeführt wird.

Im Anschluss 5 ist außerdem oberseitig eine Gasleitung 10 angeflanscht, die mit allen Behältern 3 in gleicher Weise verbunden ist. Diese Gasleitung 10 sorgt für einen entsprechenden Volumenaustausch des Gases 4. Im Ausführungsbeispiel gemäß Figur 1 erfolgt dieser Volumenaustausch passiv, also ohne aktive Elemente wie Pumpen oder dergleichen. Das Gas 4 wird dabei aus dem Behälter 2, der gerade gefüllt wird, verdrängt und über die Gasleitung 10 in jenen Behälter 2 geleitet, der gerade entleert wird. Damit ergibt sich für die Gasleitung 10 ein besonders einfacher Aufbau, der insbesondere keinerlei Wartung erfordert. Alternativ könnte die Gasleitung 10 auch über entsprechende Ventile druckbeaufschlagt werden, um dadurch indirekt die Flüssigkeit 3 aus dem jeweiligen Behälter 2 zu verdrängen. Auf diese Weise wird das aktive Pumpsystem vom Flüssigkeitskreis in den Gaskreis verlagert.

Im gezeigten Ausführungsbeispiel sind die Flüssigkeitsleitungen 9 über einen Vorlauf-Multiplexer 11 und einen Rücklauf-Multiplexer 12 jeweils mit einem Vorlauf 13 bzw. einem Rücklauf 14 eines Heizungssystems 15 verbunden. Dieses Heizungssystem 15 ist in der Figur 1 lediglich schematisch als Heizkörper dargestellt. In der Praxis werden hier mehrere Heizkörper vorgesehen sein, die je nach Anordnung parallel oder in Serie geschaltet sind, wobei die Heizkörper dann auch durch entsprechende Drosselventile gezielt mit der Flüssigkeit 3 beaufschlagbar sind.

Der Vorlauf-Multiplexer 11 und Rücklauf-Multiplexer 12 sind aus einzelnen Ventilen 16 gebildet, die einseitig mit jeweils einer der Flüssigkeitsleitungen 9 und ausgangsseitig entweder mit dem Vorlauf 13 oder mit dem Rücklauf 14 verbunden sind. Von diesen Ventilen 16 wird immer nur eines geöffnet, wodurch einer der Behälter 2 als Quelle der Flüssigkeit 3 und ein weiterer Behälter 2 als Senke für die Flüssigkeit 3 ausgewählt ist. Durch eine im Vorlauf 13 vorgesehene Pumpe 17 wird diese Flüssigkeitsströmung erzeugt und aufrechterhalten. Alternativ kann die Pumpe 17 auch im Rücklauf 14 vorgesehen sein.

Alternativ kann der Vorlauf-Multiplexer (11) bzw. der Rücklauf-Multiplexer (12) auch jeweils als komplexeres Ventil ausgebildet sein, ohne eine Vielzahl von Einzelventilen (16) zu erfordern. Beispielsweise kann dieser Multiplexer (11, 12) in Form einer Scheibe mit mindestens einer Öffnung ausgebildet sein, die verschiedene Verbindungsleitungen zu den Behältern (2) wahlweise mit einer gemeinsamen Leitung verbindet. Durch Verdrehen der Scheibe kann dann ein bestimmter Behälter (2) ausgewählt werden. Die rotierende Scheibe kann auch durch einen verschiebbaren Schaft ersetzt werden, der mindestens einen Durchtrittskanal aufweist. Durch Verschieben des Schaftes kann dann wahlweise einer der Behälter (2) ausgewählt werden.

Durch die dargestellte und geschilderte Ausführungsform der Vorrichtung 1 wird erreicht, dass zum Entnehmen der Flüssigkeit 3 aus dem Behälter 2 keine erkaltete Flüssigkeit 2 nachgefüllt werden muss, um das Volumen aufrechtzuerhalten. Damit entfällt auch die Notwendigkeit, in den Behälter 2 eine Schichtung zwischen warmer und kalter Flüssigkeit 3 vorzusehen, die zu beträchtlichen Wärmeverlusten führen kann.

Um die Ventile 16 des Vorlauf-Multiplexers 11 und Rücklauf-Multiplexers 12 korrekt anzusteuern, ist ein Controller 18 vorgesehen. Dieser Controller 18 steht mit einem Drucksensor 19 in Wirkverbindung, der saugseitig an der Pumpe 17 vorgesehen ist. Je niedriger die Füllhöhe im jeweils ausgewählten Behälter 2 ist, umso niedriger wird der Druck am Drucksensor 19 sein, da die Pumpe 17 zusätzlich zum Strömungswiderstand noch eine entsprechende Saughöhe überwinden muss. Damit kann der vom Drucksensor 19 ermittelte Druck als Maß für die Füllhöhe der Flüssigkeit 3 im jeweils ausgewählten Behälter 2 genutzt werden.

Im Rücklauf 14 befindet sich ein weiterer Drucksensor 20, der ebenfalls mit dem Controller 18 verbunden ist. Dieser Drucksensor 20 erfasst den Gegendruck jenes Behälters 2, der vom Rücklauf-Multiplexer 12 zum Befüllen ausgewählt ist. Je höher der Füllstand in diesem Behälter 2 ist, umso höher wird auch der Gegendruck sein, der vom Drucksensor 20 erfasst wird. Damit liefert der Drucksensor 20 ein Maß für die Füllhöhe des zu befüllenden Behälters 2.

Der Controller 18 überwacht die Drucksensoren 19, 20 um zu verhindern, dass der Behälter 2, aus dem Flüssigkeit 3 entnommen wird, leerläuft bzw. der Behälter 2, in den Flüssigkeit 3 gefüllt wird, überläuft. Alternativ oder zusätzlich kann der Behälter 2 auch mit mindestens einem Schwimmer betätigten Ventil ausgerüstet sein, um ein Leer- und bzw. Überlaufen desselben zu verhindern. Der Controller 18 ist außerdem mit Temperatursensoren 21 verbunden, die in jedem der Behälter 2 vorgesehen sind. Diese Temperatursensoren 21 ermitteln die Temperaturen der im jeweiligen Behälter 2 gespeicherten Flüssigkeit 3. Alternativ ist auch daran gedacht, die Temperatursensoren 21 in den Vorlauf 13 und/oder Rücklauf 14 zu integrieren. In diesem Fall erhält der Controller 18 nur noch Informationen über die Temperatur der gespeicherten Flüssigkeit 3, während diese in den Behälter 2 gefüllt oder von diesem entnommen wird. Um die jeweilige Flüssigkeitstemperatur in den Behältern 2 zu andren Zeiten zu ermitteln, muss der Controller 18 dann auf Grundlage der von den Temperatursensoren 21 gewonnenen Daten den Temperaturverlauf der Flüssigkeit 3 in den Behältern 2 berechnen, indem ein Modell für Wärmeverluste unter Berücksichtigung der Temperaturen aller benachbarten Behälter 2 berechnet wird. Auf diese Weise ergibt sich eine erhebliche Vereinfachung der Sensorik auf Kosten des Rechenaufwands im Controller 18 und der Genauigkeit der Temperaturbestimmung der Flüssigkeiten 3. Der Controller 18 erhält über eine Anforderungsleitung 22 eine Information über das vom Heizungssystem 15 angeforderte Temperaturniveau und vergleicht dieses Temperaturniveau mit den Temperaturen der Behälter 2, die von den Temperatursensoren 21 an den Controller 18 übermittelt werden. Behälter 2, deren Temperatur unter der Anforderungstemperatur liegen, werden dabei nicht berücksichtigt. Aus jenen Behältern 2, die das Anforderungsniveau erfüllen, wird vorzugsweise vom Controller 18 jener ausgewählt, der die niedrigste gerade noch ausreichende Temperatur aufweist. Auf diese Weise werden die in den Behältern 2 vorhandenen Temperaturniveaus optimal zur Erfüllung der jeweiligen Temperaturanforderung genutzt.

Um die in den Behältern 2 gespeicherte Flüssigkeit 3 wieder zu erwärmen, sind der Vorlauf 13 und Rücklauf 14 über Drei-Wege-Ventile 23 mit dem Heizungssystem 15 verbunden. Diese Drei-Wege-Ventile 23 ermöglichen einen Bypass zu einer Wärmequelle 24, wobei auch parallele Flüssigkeitsströmungen durch das Heizungssystem 15 und die Wärmequelle 24 möglich sind. Dabei kann frei gewählt werden, ob das Heizungssystem 15 zusätzlich zur Wärmequelle 24 mit Flüssigkeit 3 aus den Behältern 2 versorgt wird, oder ein Teil der von der Wärmequelle 24 erwärmten Flüssigkeit 3 in den Behältern 2 gespeichert wird. Dies hängt im Wesentlichen von der Wärmeanforderung des Heizungssystems 15 und der verfügbaren Wärmemenge der Wärmequelle 24 ab. Zu diesem Zweck sind die Drei-Wege-Ventile 23 ebenfalls vom Controller 18 angesteuert. Der Controller 18 überprüft dabei die Wärmeanforderung anhand von Temperatursensoren 25, 26 im Vorlauf 13 und Rücklauf 14 und stellt dann die Drei-Wege-Ventile 23 entsprechend den Wärmeanforderungen ein.

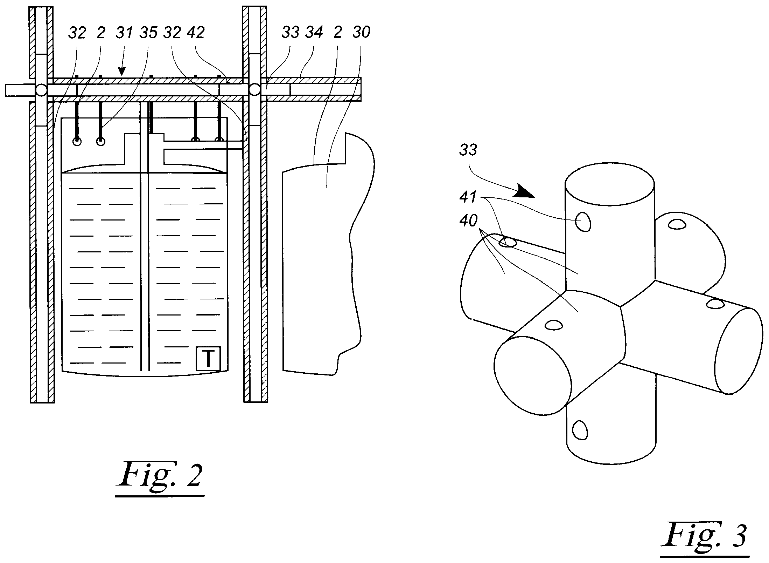

Die Figur 2 zeigt eine Schnittdarstellung eines Details der Vorrichtung 1 gemäß Figur 1, wobei gleiche Bezugszeichen gleiche Teile benennen. Die Behälter 2 bestehen aus einer zugfesten aber formveränderlichen Kunststofffolie 30, welche von einem nicht dargestellten Netz getragen und an einem Gestell 31 aufgehängt ist. Die Kunststofffolie 30 hat dabei den Zweck, einen möglichst leichten und einfach zu transportierenden Aufbau für den Behälter 2 zu realisieren. Das Gestell 31 besteht aus Stützfüßen 32, welche zwischen Behältern 2 vorgesehen sind und die Gewichtskraft von benachbarten Behältern 2 jeweils abstützen. Alternativ zur Darstellung gemäß Figur 2 können zwischen den Stützfüßen 32 auch mehrere der Behälter 2 vorgesehen sein, um auf diese Weise das Behältervolumen zu reduzieren. Diese Stützfüße 32 sind über Steckverbinder 33 mit Querstangen 34 verbunden, die oberhalb jedes Behälters 2 beispielsweise ein Quadrat bilden. An diesen Querstangen 34 sind dann die Behälter 2 mittels Seilen 35 hängend gehalten. Alternativ könnten auch an den Behältern 2 Schlaufen angeformt sein, die an den Querstangen 34 gehalten sind.

Die Figur 3 zeigt eine räumliche Darstellung eines Steckverbinders 33, der an jedem Verbindungspunkt zwischen den Stützfüßen 32 und den Querstangen 34 vorgesehen sein kann. Dieser Steckverbinder 33 besteht im Wesentlichen aus sechs Zylindern 40, von denen je zwei axial fluchtend angeordnet sind. Diese Paare von axial fluchtenden Zylindern 40 sind jeweils senkrecht zueinander angeordnet, so dass sich auf diese Weise Verbindungen für alle drei orthogonalen Raumrichtungen ergeben. Die Zylinder 40 sind dabei derart bemessen, dass sie in die rohrförmigen Stützfüße 32 bzw. Querstangen 34 eingeführt werden können. Auf diese Weise ergibt sich ein fester Verbund des Gestells 31.

Insbesondere, wenn das Gestell 31 freistehend angeordnet werden soll, kann die Verbindung der Stützfüße 32 und Querstangen 34 mit dem Steckverbinder 33 mittels federnd vorgespannter Kugeln 41 realisiert werden. Hierzu weisen die Stützfüße 32 und Querstangen 34 entsprechende Vertiefungen 42 auf, die in Figur 2 zu sehen sind.

Alternativ ist auch daran gedacht, jede beliebige andere Sicherung vorzusehen, die dem Fachmann bekannt ist. Beispielsweise könnten im Steckverbinder 33 entsprechende Gewindebohrungen vorgesehen sein, in die Schrauben zur Sicherung der Stützfüße 32 bzw. der Querstangen 34 eingreifen.

**Bezugszeichenliste**

| | | | |
|---|---|---|---|
| 1 | Vorrichtung | 34 | Querstange |
| 2 | Behälter | 35 | Seil |
| 3 | Flüssigkeit | 40 | Zylinder |
| 4 | Gas | 41 | Kugel |
| 5 | Anschluss | 42 | Vertiefung |
| 6 | Tauchrohr | | |
| 7 | Boden | | |
| 8 | unteres Ende | | |
| 9 | Flüssigkeitsleitung | | |
| 10 | Gasleitung | | |
| 11 | Vorlauf-Multiplexer | | |
| 12 | Rücklauf-Multiplexer | | |
| 13 | Vorlauf | | |
| 14 | Rücklauf | | |
| 15 | Heizungssystem | | |
| 16 | Ventil | | |
| 17 | Pumpe | | |
| 18 | Controller | | |
| 19 | Drucksensor | | |
| 20 | Drucksensor | | |
| 21 | Temperatursensor | | |
| 22 | Anforderungsleitung | | |
| 23 | Drei-Wege-Ventil | | |
| 24 | Wärmequelle | | |
| 25 | Temperatursensor | | |
| 26 | Temperatursensor | | |
| 30 | Kunststofffolie | | |
| 31 | Gestell | | |
| 32 | Stützfuß | | |
| 33 | Steckverbinder | | |

## Patentansprüche

1. Vorrichtung zum Speichern von thermischer Energie mittels mindestens einer Flüssigkeit (3), die in Behältern (2) vorgesehen ist, die die mindestens eine Flüssigkeit (3) und mindestens ein Gas (4) zum Volumenausgleich aufnehmen können, wobei die Behälter (2) gasseitig in kommunizierender Verbindung stehen und flüssigkeitsseitig über mit Ventilen (16) absperrbaren Flüssigkeitsleitungen (9) wahlweise mit mindestens einem Vorlauf (13) und mindestens einem Rücklauf (14) verbindbar sind, so dass die Behälter (2) wahlweise als Wärmequelle oder Wärmesenke nutzbar sind, wobei die Ventile (16) einen Vorlauf- (11) und/oder Rücklauf-Multiplexer (12) bilden **dadurch gekennzeichnet, dass** der mindestens eine Behälter (2) an mindestens einem Gestell (31) hängend gehalten ist.

2. Vorrichtung nach Anspruch 1, **dadurch gekennzeichnet, dass** mindestens zwei der Behälter (2) gasseitig durch mindestens eine Gasleitung (10) in kommunizierender Verbindung stehen.

3. Vorrichtung nach Anspruch 2, **dadurch gekennzeichnet, dass** die mindestens eine Gasleitung (10) mit den Behältern (2) ein geschlossenes System bildet.

4. Vorrichtung nach mindestens einem der Ansprüche 1 bis 3, **dadurch gekennzeichnet, dass** zu jedem der Behälter (2) eine der Flüssigkeitsleitungen (9) führt, über die der Behälter (2) wahlweise mit der mindestens einen Flüssigkeit (3) gefüllt oder entleert wird.

5. Vorrichtung nach mindestens einem der Ansprüche 1 bis 4, **dadurch gekennzeichnet, dass** das mindestens eine Gas (4) von der mindestens einen Flüssigkeit (3) durch mindestens eine formveränderliche Behälterwand getrennt ist.

6. Vorrichtung nach Anspruch 5, **dadurch gekennzeichnet, dass** im Vorlauf (13) und/oder Rücklauf (14) mindestens ein Sensor (19, 20, 21) vorgesehen ist.

7. Vorrichtung nach mindestens einem der Ansprüche 1 bis 6, **dadurch gekennzeichnet, dass** das mindestens eine Gestell (31) modular aufgebaut ist und Stützfüße (32) aufweist, die ein Gewicht von benachbarten Behältern (2) abstützen können.

8. Vorrichtung mindestens einem der Ansprüche 1 bis 7, **dadurch gekennzeichnet, dass** das mindestens eine Gestell (31) mittels Steckverbindern (33) zusammengehalten ist.

9. Vorrichtung nach mindestens einem der Ansprüche 1 bis 8, **dadurch gekennzeichnet, dass** das mindestens eine Gestell (31) übereinander angeordnete Behälter (2) abstützen kann, welche zumindest teilweise hydrostatisch entkoppelt sind.

10. Vorrichtung nach Anspruch 9, **dadurch gekennzeichnet, dass** die Summe der Speichervolumina der Behälter (2) derart bemessen ist, dass diese wenigstens um das maximale Füllvolumen eines der Behälter (2) größer ist als die Menge der zu speichernden mindestens einen Flüssigkeit (3).

11. Vorrichtung nach mindestens einem der Ansprüche 1 bis 10, **dadurch gekennzeichnet, dass** das mindestens eine Gas (4) biologisch inert ist.

12. Vorrichtung nach mindestens einem der Ansprüche 1 bis 11, **dadurch gekennzeichnet, dass** mindestens ein Controller (18) vorgesehen ist, der den Füllzustand der Behälter (2) überwacht und mindestens eines der Ventile (16) derart ansteuert, dass ein Über- und/oder Leerlaufen der Behälter (2) verhindert wird.

## Claims

1. Device for storing thermal energy by means of at least one liquid (3), which at least one liquid is provided in containers (2) which are able to receive the at least one liquid (3) and at least one gas (4) for equalization of volume, wherein the containers (2), on the gas side, are connected in a communicating manner, and, on the liquid side, via liquid lines (9) able to be shut off by way of valves (16), are connectable selectively to at least one feed line (13) and at least one return line (14), so that the containers (2) are usable selectively as heat source or heat sink, wherein the valves (16) form a feed-line multiplexer (11) and/or return-line multiplexer (12), **characterized in that** the at least one container (2) is held in a hanging manner on at least one framework (31).

2. Device according to Claim 1, **characterized in that** at least two of the containers (2) are connected in a communicating manner on the gas side by at least one gas line (10).

3. Device according to Claim 2, **characterized in that** the at least one gas line (10) forms with the containers (2) a closed system.

4. Device according to at least one of Claims 1 to 3, **characterized in that** one of the liquid lines (9) leads to each of the containers (2), via which the container (2) is selectively filled with the at least one liquid (3) or emptied.

5. Device according to at least one of Claims 1 to 4, **characterized in that** the at least one gas (4) is separated from the at least one liquid (3) by at least one container wall of variable shape.

6. Device according to Claim 5, **characterized in that** provision is made of at least one sensor (19, 20, 21) in the feed line (13) and/or return line (14).

7. Device according to at least one of Claims 1 to 6, **characterized in that** the at least one framework (31) is of modular construction and has support feet (32) which are able to support a weight of adjacent containers (2).

8. Device according to at least one of Claims 1 to 7, **characterized in that** the at least one framework (31) is held together by means of plug connectors (33) .

9. Device according to at least one of Claims 1 to 8, **characterized in that** the at least one framework (31) is able to support containers (2) which are arranged one above the other and which are at least partially hydrostatically decoupled.

10. Device according to Claim 9, **characterized in that** the sum of the storage volumes of the containers (2) is such that it is greater than the amount of the at least one liquid (3) to be stored at least by the maximum filling volume of one of the containers (2).

11. Device according to at least one of Claims 1 to 10, **characterized in that** the at least one gas (4) is biologically inert.

12. Device according to at least one of Claims 1 to 11, **characterized in that** provision is made of at least one controller (18) which monitors the filling state of the containers (2) and which controls at least one of the valves (16) in such a way that a situation in which the containers (2) overflow and/or become empty is prevented.

## Revendications

1. Dispositif de stockage d'énergie thermique au moyen d'au moins un liquide (3) qui est prévu dans des récipients (2) qui peuvent contenir l'au moins un liquide (3) et au moins un gaz (4) de compensation de volume, les récipients (2) étant en communication côté gaz et pouvant être reliés côté liquide sélectivement à au moins une voie aller (13) et au moins une voie retour (14) par le biais de conduites de liquide (9) pouvant être fermées par des vannes (16) de sorte que les récipients (2) puissent être utilisés sélectivement comme source de chaleur ou dissipateur de chaleur, les vannes (16) formant un multiplexeur aller (11) et/ou retour (12), **caractérisé en ce que** l'au moins un conteneur (2) est suspendu à au moins un cadre (31).

2. Dispositif selon la revendication 1, **caractérisé en ce qu'**au moins deux des récipients (2) sont en communication côté gaz par le biais d'au moins une conduite de gaz (10).

3. Dispositif selon la revendication 2, **caractérisé en ce que** l'au moins une conduite de gaz (10) forme un système fermé avec les récipients (2).

4. Dispositif selon l'une au moins des revendications 1 à 3, **caractérisé en ce que** l'une des conduites de liquide (9), par laquelle le récipient (2) est sélectivement rempli avec l'au moins un liquide (3) ou vidé de celui-ci, aboutit à chacun des récipients (2).

5. Dispositif selon l'une au moins des revendications 1 à 4, **caractérisé en ce que** l'au moins un gaz (4) est séparé de l'au moins un liquide (3) par au moins une paroi de récipient de forme variable.

6. Dispositif selon la revendication 5, **caractérisé en ce qu'**au moins un capteur (19, 20, 21) est prévu dans la voie aller (13) et/ou la voie retour (14).

7. Dispositif selon l'une au moins des revendications 1 à 6, **caractérisé en ce que** l'au moins un cadre (31) a une structure modulaire et comporte des pieds de support (32) qui peuvent supporter un poids de récipients adjacents (2).

8. Dispositif l'une au moins des revendications 1 à 7, **caractérisé en ce que** l'au moins un cadre (31) est maintenu assemblé au moyen de connecteurs enfichables (33) .

9. Dispositif selon l'une au moins des revendications 1 à 8, **caractérisé en ce que** l'au moins un cadre (31) peut supporter des récipients (2) qui sont disposés les uns au-dessus des autres et qui sont au moins partiellement découplés du point de vue hydrostatique.

10. Dispositif selon la revendication 9, **caractérisé en ce que** la somme des volumes de stockage des récipients (2) est dimensionnée de manière à être supérieure, d'au moins le volume de remplissage maximum d'un des récipients (2), à la quantité de l'au moins un liquide (3) à stocker.

11. Dispositif selon l'une au moins des revendications 1 à 10, **caractérisé en ce que** l'au moins un gaz (4) est biologiquement inerte.

12. Dispositif selon l'une au moins des revendications 1 à 11, **caractérisé en ce qu'**au moins un contrôleur (18) est prévu qui surveille l'état de remplissage des récipients (2) et commande au moins une des vannes (16) de manière à empêcher un débordement et/ou un vidage des récipients (2).
